# EUROPÄISCHE PATENTSCHRIFT

(11) **EP 1 277 028 B1**
(45) Veröffentlichungstag und Bekanntmachung des Hinweises auf die Patenterteilung: **09.02.2005**
(21) Anmeldenummer: 01929504.7
(22) Anmeldetag: 05.04.2001
(51) Int. Cl.: G01B 21/04, G01B 11/00, G01B 5/008, G01B 7/008

(54) **KOORDINATENMESSGERÄT ODER WERKZEUGMASCHINE**
CO-ORDINATE MEASURING DEVICE OR MACHINE TOOL
INSTRUMENT DE MESURE A COORDONNEES OU MACHINE-OUTIL

(30) Priorität: 28.04.2000 DE 10020842
(43) Veröffentlichungstag der Anmeldung: 22.01.2003
(73) Patentinhaber: Carl Zeiss Industrielle Messtechnik GmbH, 73447 Oberkochen (DE)
(72) Erfinder: RUCK, Otto, 73479 Pfahlheim (DE)
(74) Vertreter: Henckell, Carsten
(86) Internationale Anmeldenummer: PCT/EP2001/003860
(87) Internationale Veröffentlichungsnummer: WO 2001/084076

(56) Entgegenhaltungen:
- EP-A- 0 462 289
- DE-A- 4 327 937
- US-A- 4 858 157
- US-A- 5 517 311
- US-A- 5 982 491

## Beschreibung

Die Erfindung betrifft ein Koordinatenmeßgerät oder eine Werkzeugmaschine mit einer Steuer- und Auswerteeinheit, sowie wenigstens einem unabhängig von der Steuer- und Auswerteeinheit arbeitenden Meßsensor, der von der Mechanik des Koordinatenmeßgerätes oder der Werkzeugmaschine gegenüber einem zu vermessenden Werkstück in den drei Koordinatenrichtungen verfahren werden kann.

Derartige Koordinatenmeßgeräte und Werkzeugmaschinen sind bereits seit längerem bekannt. Bei den Sensoren handelt es sich hierbei meist um optische Tastköpfe, wie beispielsweise Triangulationstaster oder Videokameras die eine eigene Auswerteelektronik aufweisen. Der Systemtakt dieser Auswerteelektronik ist beispielsweise bei einer Videokamera als Meßsensor durch die Videofrequenz der Kamera festgelegt und damit erheblich höher als der Systemtakt der Steuerung eines Koordinatenmeßgerätes oder einer Werkzeugmaschine, der auf die Antriebsregelung optimiert ist. Eine Synchronisierung des Meßsensors mit der Steuer- und Auswerteeinheit ist ohne besondere Zusatzmaßnahmen deshalb nur dann möglich, wenn eine Auswertung bei Stillstand des Koordinatenmeßgerätes oder der Werkzeugmaschine erfolgt, da sich nur dann die Sensormeßwerte des Meßsensors und die Maschinenmeßwerte des Koordinatenmeßgerätes zeitlich nicht ändern. Hierdurch wird jedoch die Durchführung einer größeren Meßaufgabe immens zeitaufwendig, da zur Aufnahme jedes Meßpunktes das Koordinatenmeßgerät erst vollkommen zum Stillstand kommen muß.

Um dieses Problem zu beseitigen, wurden in der Vergangenheit teils sehr aufwendige Schnittstellen zwischen der Steuer- und Auswerteeinheit des Koordinatenmeßgerätes oder der Werkzeugmaschine und dem unabhängig hiervon arbeitenden Meßsensor entwickelt, Ein derartiges Koordinatenmeßgerät ist beispielsweise in unserem US-Patent US 5,982,491 beschrieben. Hierin ist ein unabhängig vom Koordinatenmeßgerät arbeitender Laser-Triangulationstaster beschrieben, der über die Mechanik eines Koordinatenmeßgerätes in den drei Koordinatenrichtungen x, y, z bewegt werden kann und zur Detektion von Kanten auf Werkstücken dient. Der Meßsensor führt den Abtaststrahl hierbei immer auf einer kreisförmigen Bahn, wobei die Mechanik des Koordinatenmeßgerätes den Meßsensor lotrecht über die Kante führt. Um die ausgewerteten Sensormeßwerte des Meßsensors mit den Maschinenmeßwerten der Maßstäbe des Koordinatenmeßgerätes synchronisieren zu können, ist sowohl im Koordinatenmeßgerät, wie auch im Meßsensor eine speziell für den Meßsensor entwickelte Schnittstelle vorgesehen, über die der Meßsensor im nachhinein der Steuerung des Koordinatenmeßgerätes mitteilt, um wieviele Takte zurückversetzt der Meßsensor gegenüber der überfahrenen Kante eine fest definierte Stellung eingenommen hat.

Weiterhin offenbart US-A-4 858 157 ein Koordinatenmeßgerät mit einer Kamera als Meßsensor und einer Steuer-/Auswerteeinheit. Zur Synchronisation erzeugt ein Pulsgeber ein Signal, das sowohl an die Kamera als auch an einen zur Steuer-/Auswerteeinheit gehörenden Zähler weitergegeben wird.

Hiervon ausgehend liegt unserer Erfindung die Aufgabe zugrunde ein Koordinatenmeßgerät oder eine Werkzeugmaschine vorzuschlagen, dessen Steuer- und Auswerteeinheit mit einem hiervon unabhängig arbeitenden Meßsensor einfach synchronisiert werden kann. Aufgabe ist es ferner, ein entsprechendes Verfahren anzugeben.

Die Aufgabe wird durch die Merkmale der unabhängigen Ansprüche 1 und 11 gelöst.

Der Grundgedanke unserer Erfindung ist hierbei darin zu sehen, daß sowohl im Meßsensor wie auch in der Steuer- und Auswerteeinheit unabhängig voneinander arbeitende Zeitgeber vorgesehen sind, wobei die besagten Zeitgeber auf einen gemeinsamen Startzeitpunkt abgeglichen werden.

Ein erfindungsgemäßes Koordinatenmeßgerät bzw. eine Werkzeugmaschine weist gegenüber dem bislang bekannten Stand der Technik den erheblichen Vorteil auf, daß hierdurch ein Koordinatenmeßgerät geschaffen wurde, das auf relativ einfache Weise unabhängig vom Koordinatenmeßgerät arbeitende Meßsensoren mit der Steuer- und Auswerteeinheit des Koordinatenmeßgerätes oder der Werkzeugmaschine synchronisieren kann. Hierdurch ergibt sich der besondere Vorteil, daß hierdurch ein sehr einfacher Standard geschaffen werden kann, an den sich die Hersteller von entsprechenden Meßsensoren ohne großen Aufwand anlehnen können. Außerdem ist es auch sehr einfach möglich, alte Meßsensoren, die diesen Standard noch nicht aufweisen durch Hinzufügung eines kleinen Programmabschnittes für diesen Standard tauglich zu machen. Auch für die Hersteller von Koordinatenmeßgeräten und Werkzeugmaschinen bringt dieser Standard erhebliche Vorteile. Zum einen entfällt hierdurch die oftmals zeit- und kostenintensive Anpassung eines Koordinatenmeßgerätes oder einer Werkzeugmaschine an einen bestimmten Sensortyp. Zum anderen wird hierdurch die Bandbreite der am Koordinatenmeßgerät oder an der Werkzeugmaschine einsetzbaren Sensoren in Zukunft erheblich erweitert werden.

Als Zeitgeber im Meßsensor, wie auch in der Steuer- und Auswerteeinheit sollte der im System vorhandene Timer mit der höchsten Auflösung verwendet werden, also beispielsweise bei einem Personal Computer das Clock-Counter-Register für die Systemtakt-Interrupt-Quelle oder bei einem Mikroprozessor das Time-Stamp-Counter-Register. Dies ist deshalb notwendig, da relativ kleine Zeitinkremente benötigt werden. Die Systemuhr beispielsweise eines Personal Computers, die nur 18 Zeitinkremente pro Sekunde liefert, ist hierfür nicht genau genug.

Der Abgleich der Zeitgeber auf einen gemeinsamen Startzeitpunkt kann hierbei unterschiedlich erfolgen. Im einfachsten Fall werden zu einem Zeitpunkt, die jeweiligen Zeitwerte der Zeitgeber ausgelesen und als Startzeitpunkt gespeichert. In einer bevorzugten Ausführungsform wird man jedoch die Zeitgeber auf Werte abgleichen, die eine gemeinsame Uhrzeit repräsentieren. Besonders vorteilhaft sollten die Zeitgeber auf Weltzeit eingestellt werden, wie sie beispielsweise auch bei sogenannten Funkuhren eingestellt wird.

Um die Laufabweichungen zwischen den Zeitgebern möglichst gering zu halten, sollten die Zeitgeber während eines Meßablaufes mehrfach in kürzeren Zeitabständen auf einen gemeinsamen Startzeitpunkt abgeglichen werden.

Der zeitliche Bezug der durch die Zeitgeber abgegebenen Zeitwerte zueinander kann in einer besonders einfachen Variante ermittelt werden, indem zu einem Zeitpunkt nach dem Startzeitpunkt erneut gemeinsam die Zeitwerte der Zeitgeber ausgelesen werden und jeweils die Differenz dieser Zeitwerte zu den zugehörigen Zeitwerten zum Startzeitpunkt gebildet wird. Der Quotient dieser Differenzen gibt das Laufzeitverhältnis der Zeitgeber zueinander an.

Besonders vorteilhaft werden die Zeitgeber jedoch auf eine gemeinsame Zeiteinheit, wie beispielsweise eine Sekunde normiert. Hierdurch können die Zeitwerte, die vom Zeitgeber des Meßsensors stammen unmittelbar mit den Zeitwerten, die vom Zeitgeber der Steuerund Auswerteeinheit stammen verglichen werden. Zur Normierung sind eine Vielzahl von unterschiedlichen Varianten denkbar. Die wohl einfachste Variante ist darin zu sehen, daß sowohl die Steuer- und Auswerteeinheit, wie auch der Meßsensor den jeweiligen Zeitgeber selber normieren. Dies ist einfach möglich, indem bei dem jeweiligen Zeitgeber die Anzahl der Takte gezählt werden, bis die zugehörige Systemuhr um eine definierte Zeitspanne, z.B. eine Sekunde vorgerückt ist. Das Zeitinkrement pro Takt des Zeitgebers ergibt sich dann als Zeitspanne/Anzahl der gezählten Takte.
Genauso gut ist es beispielsweise auch möglich, daß die Steuer- und Auswerteeinheit die Normierung durchführt. Dies könnte beispielsweise so vor sich gehen, daß die Steuer- und Auswerteeinheit über eine Triggerleitung ein Signal ausgibt, aufgrund dessen sowohl der Zeitgeber im Meßsensor, wie auch der Zeitgeber in der Steuer- und Auswerteeinheit ausgelesen werden. Nunmehr wird, nachdem die Systemuhr der Steuer- und Auswerteeinheit um, einen Zeitbetrag vorgerückt ist erneut ein Signal über die Triggerleitung abgegeben, worauf erneut der Zeitgeber im Meßsensor, wie auch der Zeitgeber in der Steuer- und Auswerteeinheit ausgelesen werden. Das Zeitinkrement pro Takt des jeweiligen Zeitgebers ergibt sich damit analog als Zeitbetrag/Anzahl der gezählten Takte.

Damit die Steuer- und Auswerteeinheit mit dem Meßsensor sinnvoll zusammenarbeiten kann, werden die erfaßten Sensormeßwerte des Meßsensors mit einem Zeitstempel seines Zeitgebers versehen und an die Steuer- und Auswerteeinheit weiterleitet. Da die Steuerund Auswerteeinheit mit dem Meßsensor über die Zeitgeber synchronisiert sind, können die Sensormeßwerte jederzeit zeitlich in den in der Steuer- und Auswerteeinheit ablaufenden Meßablauf eingepaßt werden.

Die Notwendigkeit, die Sensormeßwerte in den Meßablauf einzupassen besteht beispielsweise dann, wenn die Sensormeßwerte auf die Bahndaten eines Meßablaufes rückgekoppelt werden sollen. Dies ist beispielsweise dann der Fall, wenn die Oberfläche eines Werkstückes kontinuierlich mit einem Laser-Triangulationstaster abgetastet werden soll. Hierzu wird der Meßsensor von der Steuerung des Koordinatenmeßgerätes parallel zur Oberfläche über die Oberfläche geführt, wobei der Abstand des Meßsensors von der Oberfläche konstant gehalten wird, indem die Sensormeßwerte so auf die Bahndaten rückgekoppelt werden, daß die Mechanik den Meßsensor in der entsprechenden Richtung nachführt.

Zur Rückkoppelung wird hierbei für jeden Sensormeßwert eine Totzeit berechnet, die sich aus der zeitlichen Differenz zwischen dem Zeitstempel des Sensormeßwertes und dem aktuellen Zeitwert des Zeitgebers in der Steuerung ergibt. Die besagte Totzeit ist in zweierlei Hinsicht von Interesse.

Einerseits zeigen große Totzeiten, daß die Datenübertragungsstrecke zwischen dem Meßsensor und der Steuer- und Auswerteeinheit oder aber auch der Meßsensor selber nur relativ langsam arbeitet. Deshalb sollte die Steuer- und Auswerteeinheit so ausgelegt sein, daß mit größer werdender Totzeit die Meßgeschwindigkeit des Meßablaufes reduziert wird.

Wie bereits oben beschrieben dient die Rückkopplung auch dazu, um den Abstand des Meßsensors von der Oberfläche des Werkstückes konstant zu halten. Je älter ein Sensormeßwert hierbei ist, desto geringer sollte der Einfluß auf die Nachregelung sein.

Deshalb sollte die Regelgröße derart berechnet werden, daß bei größer werdender Totzeit die Wirksamkeit der Rückkoppelung reduziert wird.

Des weiteren müssen die Sensormeßwerte auch dann in den Meßablauf eingepaßt werden, wenn die Sensormeßwerte mit Maschinenmeßwerten der Steuer- und Auswerteeinheit d.h. also den Maßstabswerten der Mechanik in x-, y- und z-Richtung, verrechnet werden. Dazu müssen die Sensormeßwerte mit den Maschinenmeßwerten zeitlich und damit auch räumlich in Bezug gebracht werden.

Um dies zu erreichen werden zusätzlich auch den Maschinenmeßwerten Zeitstempel angefügt, die vom Zeitgeber in der Steuer- und Auswertungseinheit abgegeben wurden, so daß die Zeitstempel der Sensormeßwerte mit den Zeitstempeln der Maschinenmeßwerte verglichen werden können.

Über Interpolation zwischen Sensormeßwerten oder Maschinenmeßwerten können jeweils zeitlich und damit auch räumlich zueinander passende Paare von Sensormeßwerten und Maschinenmeßwerten erzielt werden, die dann jeweils zur Ermittelung von Meßpunkten komponentenrichtig zusammengerechnet werden können.

Des weiteren lassen sich die mit den Zeitstempeln versehenen Sensormeßwerte auch zur Korrektur der Meßergebnisse nutzen. Durch die Zeitstempel ist nämlich im nachhinein die genaue zeitliche Abfolge der Sensormeßwerte festgelegt, sodaß sich aus dieser zeitlichen Abfolge der Sensormeßwerte Analysen, wie insbesondere Schwingungsanalysen durchführen lassen. Beispielsweise können die Sensormeßwerte einer Fourriertransformation unterzogen werden, um hierdurch die Charakteristischen Schwingungen des Koordinatenmeßgerätes festzustellen.

Als Koordinatenmeßgerät kommen hierbei grundsätzlich alle derzeit bekannten Koordinatenmeßgeräte in Betracht, bei denen ein Meßsensor in den drei Koordinatenrichtungen verfahren werden kann. Es könnte sich also beispielsweise um sogenannte Ständermeßgeräte, um Portalmeßgeräte, um Brückenmeßgeräte oder auch um Koordinatenmeßgeräte mit Drehachsen handeln. Die Koordinatenmeßgeräte können hierbei entweder mit NC-gesteuerten Antrieben versehen sein oder aber handgeführt sein.

Analog sind auch eine breite Palette von Werkzeugmaschinen denkbar. Beispielsweise könnte es sich bei einer derartigen Werkzeugmaschine um eine Fräsmaschine handeln, bei der anstelle des Fräswerkzeuges ein Meßsensor aufgenommen ist.

Auch bei den Meßsensoren kann es sich um die unterschiedlichsten Typen handeln. Beispielsweise könnte es sich um einen Laser-Triangulationstaster handeln, oder um eine Videokamera oder um einen interferometrischen Sensor.

Weitere Vorteile und Weiterbildung der Erfindung ergeben sich aus den Figuren. Hierin zeigen:
- Figur 1:: Eine rein schematische Blockdarstellung eines erfindungsgemäßen Koordinatenmeßgerätes;
- Figur 2:: eine rein schematische Darstellung der Komponenten des Meßsensors (6) aus Figur 1;
- Figur 3:: eine rein schematische Darstellung der wesentlichen Komponenten der Steuerung (2) gemäß Figur 1;
- Figur 4:: eine rein schematische Darstellung aller wesentlichen Komponenten des Rechners (1) gemäß Figur 1;
- Figur 5:: eine rein schematische Darstellung, wie sich die Meßgeschwindigkeit (Vs) in Abhängigkeit von der Totzeit ändert.
- Figur 6:: eine rein schematische Darstellung, wie die Sensormeßwerte mit den Steuerungsmeßwerten in eine räumliche Beziehung gebracht werden; und

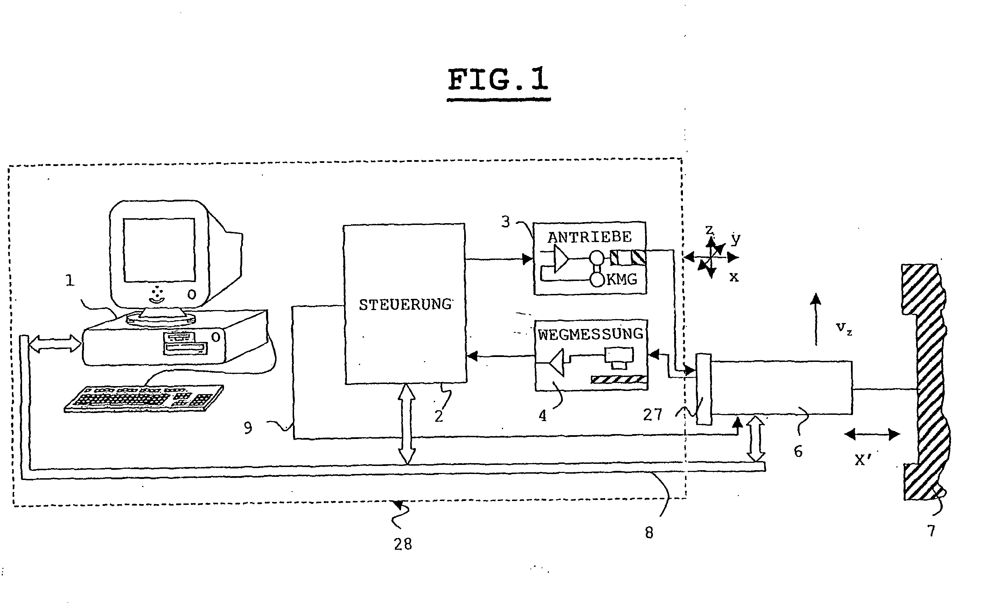

Figur 1 zeigt eine rein schematische Prinzipdarstellung eines erfindungsgemäßen Koordinatenmeßgerätes. Das Koordinatenmeßgerät weist einen Rechner (1) auf, der über eine Verbindung (8), wie beispielsweise LAN oder RS232 sowohl mit der Steuerung (2) des Koordinatenmeßgerätes, wie auch mit einem hiervon unabhängigen Meßsensor (6) kommunizieren kann. Der Meßsensor (6) ist hierbei als Laser-Triangulationstaster ausgebildet, der den Abstand zwischen der Oberfläche des Werkstückes (7) und dem Meßsensor (6) in der mit (x') bezeichneten Meßrichtung messen kann. Der Meßsensor (6) ist an einer hier nur rein schematisch gezeigten Mechanik (27) befestigt, die über Antriebe (3) in den drei Koordinatenrichtungen (x, y, z) verfahren werden kann. Die jeweiligen Positionen des Meßsensors (6) in den drei Koordinatenrichtungen (x, y, z), die im Folgenden als Maschinenmeßwerte (xᵢ, yᵢ, zᵢ) bezeichnet werden, werden über entsprechende in den Koordinatenrichtungen liegende Wegmeßsysteme (4) abgetastet und an die Steuerung (2) übergeben. Bei den Wegmeßsystemen (4) handelt es sich üblicherweise um Inkrementalmaßstäbe, die von optischen Abtastköpfen abgetastet werden.

In dem hier gezeigten speziellen Ausführungsbeispiel sieht der Meßablauf derart aus, daß der Meßsensor (6) über die Mechanik (27) in der Koordinatenrichtung (z) parallel zur Oberfläche des Werkstückes (7) verfahren wird. In der Koordinatenrichtung (x) hingegen, die hier der Einfachheit halber mit der Meßrichtung (x') des Meßsensors (6) übereinstimmt, werden die Sensormeßwerte (x'ᵢ) auf die Bahndaten in der Steuerung (2) derart rückgekoppelt, daß der Sensormeßwerte (x'ᵢ) und somit also der Abstand zwischen dem Meßsensor (6) und der Oberfläche des Werkstückes (7) weitgehend konstant bleibt.

Damit weist das Koordinatenmeßgerät also eine Steuer- und Auswerteeinheit (28), umfassend einen Rechner (1) und eine Steuerung (2) mit Antrieben (3) und Wegmeßeinheiten (4) auf sowie einen unabhängig von der Steuer- und Auswerteeinheit (28) arbeitenden Meßsensor (6) der von der Mechanik (27) des Koordinatenmeßgerätes in den drei Koordinatenrichtungen (x, y, z) verfahren werden kann.

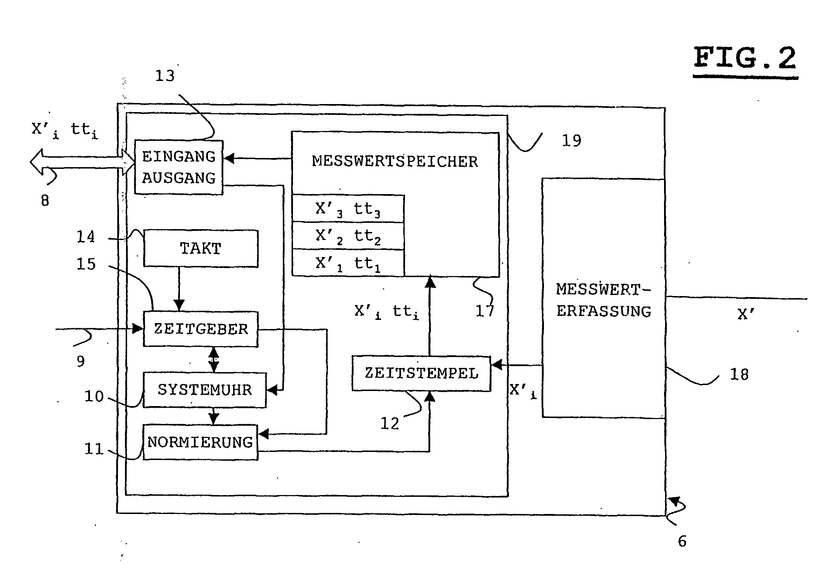

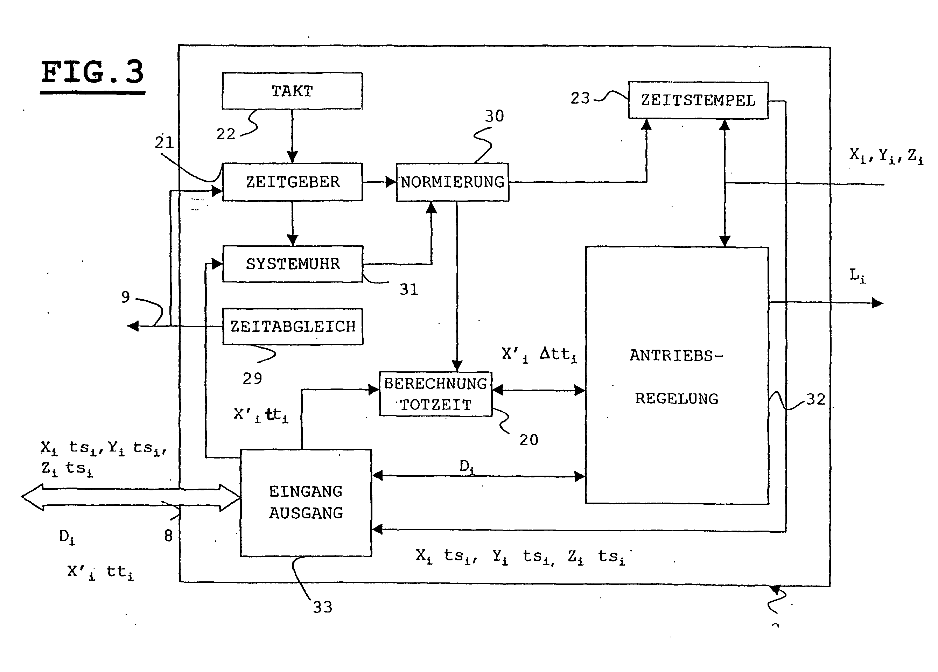

Wie bereits oben ausgeführt, arbeitet die Steuerung (2) hierbei in einem relativ niedrigen Systemtakt, der an die Regelung der Antriebe (3) angepaßt ist, während der Meßsensor (6) unabhängig hiervon mit einem eigenen, relativ hohen Takt arbeitet. Damit die Steuer- und Auswerteeinheit (28) mit dem unabhängig hiervon arbeitenden Meßsensor (6) sinnvoll zusammenarbeiten kann, werden der Meßsensor (6) sowie die Steuer- und Auswerteeinheit (28) in erfindungsgemäßer Weise synchronisiert, wie wir dies anhand von Figuren 2 und 3 im Detail erläutern werden.

Figur 2 zeigt eine rein schematische Darstellung des in Figur 1 gezeigten Meßsensors (6) mit den für die Erfindung relevanten Details. Der Meßsensor (6) umfaßt im wesentlichen eine Meßwerterfassungseinheit (18) die über Laser-Triangulation die Sensormeßwerte (x'ᵢ) also den Abstand zwischen dem Meßsensor (6) und der Werkstückoberfläche des Werkstückes (7) erfaßt, sowie einen Mikroprozessor (19), in dem die Sensormeßwerte (x'ᵢ) entsprechend weiterverarbeitet werden. Die im Mikroprozessor (19) eingezeichneten Funktionsgruppen sind hierbei im wesentlichen als Softwaremodule realisiert.

Figur 3 zeigt eine rein schematische Darstellung der in Figur 1 gezeigten Steuerung (2) mit für die Erfindung relevanten Details. Die Steuerung (2) ist hierbei ebenfalls als ein einziger Mikroprozessor ausgeführt, wobei die hierin eingezeichneten Funktionsgruppen ebenfalls als Softwaremodule realisiert sind.

Die wesentlichen Funktionsgruppen, über die der Meßsensor (6) und die Steuer- und Auswerteeinheit (28) synchronisiert werden ist hierbei ein Zeitgeber (15) der im Meßsensor (6) vorgesehen ist, sowie ein Zeitgeber (21) der in der Steuerung (2) vorgesehen ist. Bei diesen Zeitgebern handelt es sich jeweils um den Timer mit der höchsten Auflösung, nämlich das Time-Stamp-Counter-Register des Mikroprozessors (19) des Meßsensors (6) und analog das Time-Stamp-Counter-Register des Mikroprozessors der Steuerung (2). In diesen Registern liegen die von einem Startwert hochgezählten Taktflanken des jeweiligen Taktes (14 oder 22) des betreffenden Mikroprozessors vor, wobei der Inhalt als hochauflösende Basis für die jeweilige Systemuhr (10 oder 31) des betreffenden Mikroprozessors dient.

Zusätzlich weist die Steuerung (2) noch eine Abgleicheinheit (29) auf, die die beiden Zeitgeber (15 und 21) auf einen gemeinsamen Startzeitpunkt abgleicht.

In dem hier gezeigten Ausführungsbeispiel geschieht der Abgleich, indem die Systemuhr (31) und damit auch der Zeitgeber (21) in der Steuerung (2), wie auch die Systemuhr (10) und damit auch der Zeitgeber (15) im Mikroprozessor (19) des Meßsensors auf eine gemeinsame Uhrzeit eingestellt werden. Dies geschieht über die reguläre Verbindung (8) zwischen der Steuerung (2) und dem Meßsensor (6). Über eine Triggerleitung (9) wird dann ein Startimpuls an die Zeitgeber (15 und 21) gegeben zu dem die beiden Zeitgeber (15 und 21) mit der vorab eingestellten Zeit zu laufen beginnen. Nunmehr laufen die Systemuhren (10 und 31) weitestgehend synchron, so daß hierdurch auch jederzeit über den Wert des zugehörigen Zeitgebers (15 bzw. 21) der exakte Zeitpunkt ermittelt werden kann. Dies ist einfach möglich, indem für jeden der Zeitgeber (15 bzw. 21) die jeweilige Anzahl der Taktflanken gezählt wird, um die sich der Wert des Zeitgebers in einer bestimmten Zeit ändert.

Damit sich die Zeitwerte der Zeitgeber unmittelbar miteinander vergleichen lassen ist zusätzlich sowohl im Meßsensor (6) wie auch in der Steuerung (2) jeweils eine Normierungseinheit (11 bzw. 30) vorgesehen, die die vom jeweiligen Zeitgeber (15 bzw. 21) abgegebene Zeit auf eine gemeinsame Zeitbasis, bevorzugt auf eine Sekunde, normiert. Hierbei werden von der jeweiligen Normierungseinheit (11 bzw. 30) kontinuierlich die Anzahl der Takte gezählt, bis die Systemuhr (31) in der Steuerung (2) oder analog die Systemuhr (10) im Meßsensor (6) um eine Sekunde vorgerückt ist. Das Zeitinkrement pro Takt des jeweiligen Zeitgebers (15 oder 21) ergibt sich dann als 1 Sekunde/Anzahl der gezählten Takte. Damit steht der Zeitwert des jeweiligen Zeitgebers (15 oder 21) normiert zur Verfügung.

Wie der Meßsensor (6) und die Steuer- und Auswerteeinheit (28), die über die Zeitgeber (15 und 21) synchronisiert sind, nunmehr in einem Meßablauf zusammenarbeiten können, wird nunmehr detailliert anhand der Figuren 2 bis 6 erläutert.

Dazu werden zunächst, wie aus Figur 2 ersichtlich, die von der Meßwerterfassungseinheit (18) erfaßten und an den Mikroprozessor (19) weitergereichten Sensormeßwerte (x'ᵢ) an eine Einheit "Zeitstempel" (12) übergeben, die zu den Sensormeßwerten (x'ᵢ) den aktuellen normierten Zeitwert des Zeitgebers (15) als digitalen Zeitstempel (ttᵢ) anhängt und diese Sensormeßwerte (x'ᵢ) gemeinsam mit den Zeitstempeln (ttᵢ) in einem Meßwertspeicher (17) ablegt. Auf Anforderung der Steuerung (2) werden in gewissen Zeitabständen die gespeicherten Sensormeßwerte (x'ᵢ) gemeinsam mit den zugehörigen Zeitstempeln (ttᵢ) dann über die Funktionsbaugruppe "Eingang/Ausgang" (13) und die Verbindung (8) sowohl an die Steuerung (2), wie auch an den Rechner (1) der Steuer- und Auswerteeinheit (28) übermittelt. Es sei an dieser Stelle angemerkt, daß der verwendete Index i in der gesamten Anmeldung für eine natürliche Zahl steht.

Die Rückkopplung der Sensormeßwerte (x'ᵢ) auf die Bahndaten des Meßablaufes in der Steuerung (2) wird nun anhand von Figur 3 näher erläutert werden. Dazu soll zunächst die Funktionsweise der Steuerung (2) zur Durchführung des Meßablaufes ohne die Rückkopplung erläutert werden. Hierzu werden Daten (Dᵢ), die den Meßablauf definieren, vom Rechner (1) über die Verbindung (8) an die Funktionsbaugruppe (33) "Eingang/Ausgang" übermittelt, die diese Daten (Dᵢ) weiter an die Funktionsbaugruppe "Antriebsregelung" (32) weitergereicht. Hierin werden aus den Daten (Dᵢ) Bahndaten in Form von Lagesollwerten (Lᵢ) erzeugt, die in einem festen Takt an die Antriebe (3) des Koordinatenmeßgerätes weitergereicht werden und die anzufahrende Position in x-, y- und z-Richtung angeben. Von den Wegmeßsystemen (4) der Mechanik (27) wiederum werden die Maschinenmeßwerte (xᵢ, yᵢ, zᵢ) zurückgeliefert, die die aktuelle Position des Meßsensors (6) in den Koordinatenrichtungen (x, y, z) repräsentieren. Diese Maschinenmeßwerte (xᵢ, yᵢ, zᵢ) werden unter anderem an die Antriebsregelung (32) übergeben. Hierin wird ein Soll-Ist-Vergleich mit den Lagesollwerten (Lᵢ) durchgeführt und die Abweichung auf die Antriebe (3) zur Nachregelung rückgekoppelt.

Auf die Bahndaten des eben beschriebenen Meßablaufes werden nunmehr zusätzlich die Sensormeßwerte (x'ᵢ) rückgekoppelt. Dazu werden die über die Verbindung (8) übertragenen und von der Funktionsbaugruppe (33) "Eingang/Ausgang" in der Steuerung (2) empfangenen Sensormeßwerte (x'ᵢ) gemeinsam mit den zugehörigen Zeitstempeln (ttᵢ) zunächst an eine Totzeitberechnungseinheit (20) übergeben. Hierin werden zur Rückkoppelung die Totzeiten (Δttᵢ), also die zeitliche Differenz zwischen den Zeitstempeln (ttᵢ) und dem jeweils aktuellen Zeitwert des Zeitgebers (21), der durch die Normierungseinheit (30) normiert bereitgestellt wird, errechnet. Diese Totzeiten (Δttᵢ) geben an, wie "alt" die betreffenden Sensormeßwerte bezogen auf den jetzigen Zeitpunkt sind.

Die Sensormeßwerte (x'ᵢ) werden danach in zweierlei hinsicht auf die Lagesollwerte (Lᵢ) rückgekoppelt.

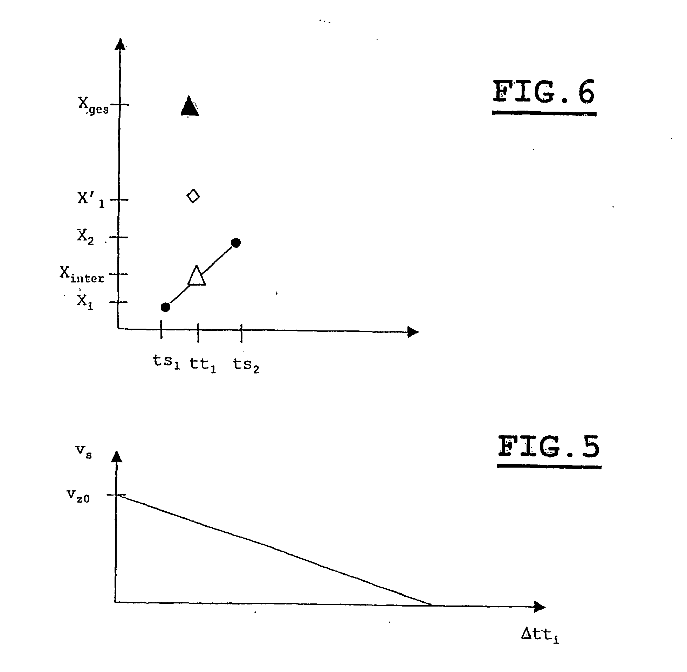

Zum einen wird die Totzeit (Δttᵢ) auf die Meßgeschwindigkeit (Vₛ) rückgekoppelt und zwar derart, daß sich bei größer werdender Totzeit (Δttᵢ) die Meßgeschwindigkeit (Vₛ) des Meßablaufes reduziert. Wie bereits oben erwähnt sind große Totzeiten ein Zeichen dafür, daß entweder die Datenübertragungsstrecke zwischen dem Meßsensor (6) und der Steuerung (2) relativ langsam ist oder aber der Meßsensor (6) relativ langsam nur Sensormeßwerte liefert. Der Sachverhalt, wie sich die Meßgeschwindigkeit (v_{z}) in Abhängigkeit von der Totzeit ändert, ist in Figur 5 gezeigt. Wie hieraus ersichtlich Variiert die Meßgeschwindigkeit (Vₛ) in Abhängigkeit von der Totzeit (Δttᵢ) zwischen dem Wert (v_{z0}) und dem Wert 0.

Zum anderen werden die Sensormeßwerte (x'ᵢ) auf die Bahndaten des Meßablaufes derart rückgekoppelt, daß die Antriebe (3) die Position des Meßsensors (6) so nachführen, daß der Abstand zwischen dem Meßsensor (6) und der Oberfläche des Werkstückes (7) immer nahezu konstant bleibt. Die Regelung ist hierbei so ausgelegt, daß bei größer werdender Totzeit (Δttᵢ) die Wirksamkeit der Rückkopplung reduziert wird. Das heißt also, daß "ältere" Meßwerte bei der Rückkopplung geringer ins Gewicht fallen als "jüngere". Diese Funktionalität ist über eine Gewichtung in Abhängigkeit von der ermittelten Totzeit (Δttᵢ) realisiert.

Neben der Rückkopplung der Sensormeßwerte (x'ᵢ) auf die Bahndaten, arbeitet der Meßsensor (6) auch insoweit mit der Steuer- und Auswerteeinheit (28) zusammen als zur Meßdatenauswertung im Rechner (1) die Sensormeßwerte (x'ᵢ) und die Maschinenmeßwerte (xᵢ, yᵢ zᵢ ) zusammengerechnet werden. Hierdurch werden die einzelnen Meßpunkte auf der Oberfläche des Werkstückes (7) berechnet. Um die Meßdatenauswertung vornehmen zu können, werden zunächst auch die Maschinenmeßwerte (xᵢ, yᵢ, zᵢ) von der Meßwerterfassung (4) an eine Zeitstempeleinheit (23) in der Steuerung (2) übergeben, die diese völlig analog zu den Sensormeßwerten mit dem aktuellen normierten Zeitwert des Zeitgebers (21) in Form eines digitalen Zeitstempels (tsᵢ) versieht. Die mit den Zeitstempeln versehenen Maschinenmeßwerte (xᵢ, yᵢ, zᵢ) werden mittels der Funktionsbaugruppe "Eingang/Ausgang" über die Verbindung (8) genau wie die Sensormeßwerte (x'ᵢ) an den Rechner (1) übertragen.

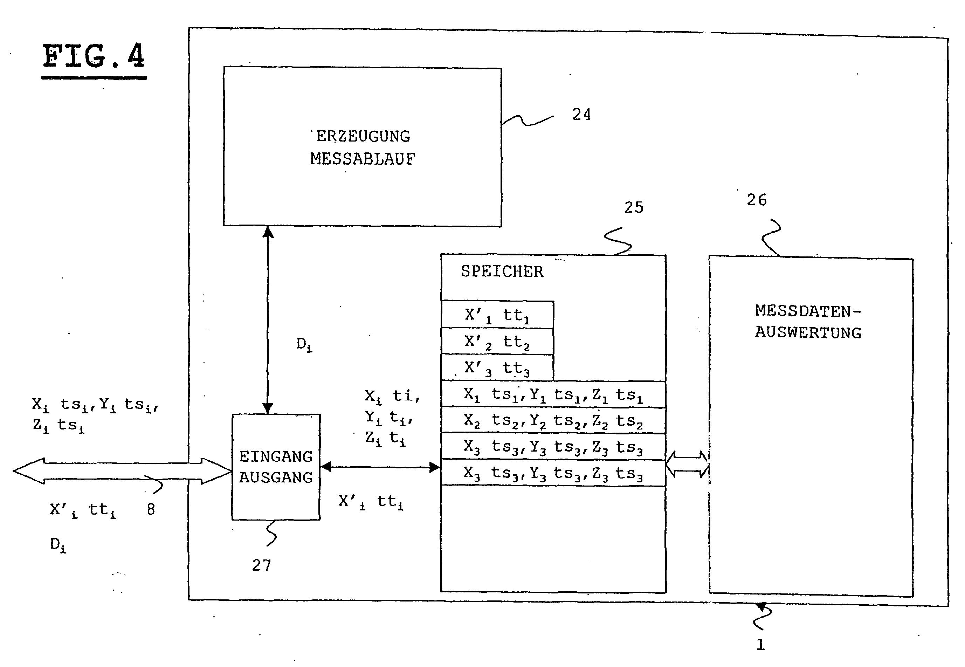

Die Meßdatenauswertung im Rechner (1) soll nunmehr im Zusammenhang mit Figur 4 erläutert werden, in der rein schematisch die Komponenten des Meßrechners dargestellt sind. Auch hierin stellen die gezeigten Funktionsbaugruppen im wesentlichen Softwaremodule dar. Wie hierin gezeigt, werden von der Funktionsbaugruppe (27) "Eingang/Ausgang" über die Verbindung (8) die Maschinenmeßwerte (xᵢ, yᵢ, zᵢ) samt zugehöriger Zeitstempel (tsᵢ) empfangen, wie auch die Sensormeßwerte (x'ᵢ) mit den entsprechenden Zeitstempeln (ttᵢ). Diese Daten werden zunächst in einem Speicher (25) zwischengespeichert und dann in der Einheit (26) "Meßdatenauswertung", wie anhand der Figur 4 erläutert, ausgewertet.

Um die einzelnen Meßpunkte auf der Oberfläche des Werkstückes (7) berechnen zu können, müssen hierbei die Sensormeßwerte (x'ᵢ) und die Maschinenmeßwerte (xᵢ, yᵢ, zᵢ) komponentenrichtig addiert werden. Da die Sensormeßwerte (x'ᵢ) und die Maschinenmeßwerte (xᵢ, yᵢ, zᵢ) nicht zu denselben Zeitpunkten aufgenommen wurden, müssen diese zunächst zeitlich und damit auch räumlich in Bezug gesetzt werden, wie dies beispielhaft für die Koordinatenrichtung (x) anhand von Figur 6 gezeigt wird. Wie in Figur 6 zu sehen ist, gibt es zwei Maschinenmeßwerte (x₁) und (x₂), denen jeweils ein Zeitstempel (ts₁) und (ts₂) zugeordnet ist. Zeitlich zwischen diesen beiden Maschinenmeßwerten (x₁) und (x₂) wurde der Sensormeßwert (x'₁) aufgenommen, der den Zeitstempel (tt₁) aufweist. Durch Vergleich der Zeitstempel (ts₁) und (ts₂) der Maschinenmeßwerte (x₁) und (x₂) und des Zeitstempels (tt₁) des Sensormeßwertes (x'₁) können die Maschinenmeßwerte (x₁) und (x₂) und der Sensormeßwert (x'₁) zeitlich in Bezug gesetzt werden. Über Interpolation zwischen den Maschinenmeßwerten (x₁) und (x₂) kann ein interpolierter Maschinenmeßwert (xᵢₙₜₑᵣ) ermittelt werden, der zum Zeitpunkt (tt₁) vorhanden gewesen wäre. Hierdurch können Paare (xᵢₙₜₑᵣ,x'₁) von Sensormeßwerten und Maschinenmeßwerten berechnet werden, die zeitlich und damit auch räumlich zusammengehören. Der intepolierte Maschinenmeßwert (xᵢₙₜₑᵣ) und der Sensormeßwert (x'₁) können nunmehr addiert werden und somit der Gesamtmeßwert (x_{ges}) für die betreffende Koordinatenrichtung durch Addition errechnet werden. Für die anderen Koordinatenrichtungen läuft dieses Verfahren natürlich vollkommen analog.

Die Funktionsbaugruppe (26) "Messdatenauswertung" kann femer aus der durch die Zeitstempel festgelegten Abfolge der Sensormeßwerte Analysen, wie insbesondere Schwingungsanalysen zur Korrektur der Meßwerte durchführen.

Wie hierbei zu sehen ist, wurde das Prinzip unserer Erfindung an einem sehr einfachen Beispiel erwähnt, das in vielfältiger Weise variiert werden kann. Beispielsweise muß nicht zwingend zwischen den Maschinenmeßwerten interpoliert werden. Genauso gut könnte auch zwischen den Sensormeßwerten interpoliert werden. Selbstverständlich muß auch der Meßsensor nicht zwingend in Richtung einer Koordinatenrichtung ausgerichtet sein. Beispielsweise kann der Sensor auch an einer sogenannten Dreh-Schwenkeinheit befestigt sein, die zwei senkrecht aufeinander stehende Drehachsen aufweist, so daß der Meßsensor (6) in eine beliebige Richtung im Raum verdreht werden kann. Anstelle eines Laser-Triangulationstasters sind weiterhin auch eine Vielzahl beliebiger anderer Sensoren denkbar. Beispielsweise könnte es sich genausogut um eine Videokamera handeln, die zur zweidimensionalen Vermessung parallel zur Werkstückoberfläche verwendet werden kann.

## Patentansprüche

1. Koordinatenmeßgerät oder Werkzeugmaschine mit einer Steuer- und Auswerteeinheit (28) einer Mechanik (27) sowie wenigstens einem unabhängig von der Steuer- und Auswerteeinheit arbeitenden Meßsensor (6), der von der Mechanik (27) des Koordinatenmeßgerätes oder der Werkzeugmaschine gegenüber einem zu vermessenden Werkstück (7) in den drei Koordinatenrichtungen (x,y,z) verfahren werden kann, **dadurch gekennzeichnet, daß** zur Synchronisierung des Meßsensors (6) und der Steuer- und Auswerteeinheit (28) sowohl im Meßsensor ein Zeitgeber (15) vorgesehen ist wie auch in der Steuer- und Auswerteeinheit (28) ein Zeitgeber (21) vorgesehen ist, wobei die Zeitgeber voneinander unabhängig arbeiten, und eine Abgleicheinheit (29) vorgesehen ist, die zum Abgleichen der besagten Zeitgeber auf einen gemeinsamen Startzeitpunkt eingerichtet ist.

2. Koordinatenmeßgerät oder Werkzeugmaschine nach Anspruch 1, **dadurch gekennzeichnet, daß** wenigstens eine Normierungeinheit (11,30) vorgesehen ist, die zusätzlich die Zeitgeber auf eine gemeinsame Zeiteinheit normiert.

3. Koordinatenmeßgerät oder Werkzeugmaschine nach einem der Ansprüche 1 bis 2, **dadurch gekennzeichnet, daß** der Meßsensor (6) die erfaßten Sensormeßwerte (X'ᵢ) zur Weiterverarbeitung mit einem Zeitstempel (ttᵢ) seines Zeitgebers (15) versieht und an die Steuer- und Auswerteeinheit (28) weiterleitet.

4. Koordinatenmeßgerät oder Werkzeugmaschine nach Anspruch 3, **dadurch gekennzeichnet, daß** die Steuer- und Auswerteeinheit (28) die Sensormeßwerte (X'ᵢ) auf die Bahndaten eines Meßablaufes rückkoppelt.

5. Koordinatenmeßgerät oder Werkzeugmaschine nach Anspruch 4, **dadurch gekennzeichnet, daß** die Steuer- und Auswerteeinheit zur Rückkoppelung eine Totzeit (Δttᵢ) berechnet, die sich aus der zeitlichen Differenz zwischen dem Zeitstempel (ttᵢ) und dem aktuellen Zeitwert des Zeitgebers (21) in der Steuer- und Auswerteeinheit ergibt, wobei bei größer werdender Totzeit (Δttᵢ) die Wirksamkeit der Rückkoppelung reduziert wird und/oder die Meßgeschwindigkeit (Vₛ) des Meßablaufes reduziert wird.

6. Koordinatenmeßgerät oder Werkzeugmaschine nach einem der Ansprüche 3 bis 5, **dadurch gekennzeichnet, daß** die Steuer- und Auswerteeinheit die Sensormeßwerte (X'ᵢ) mit Maschinenmeßwerten (xᵢ,yᵢ,zᵢ), die durch die Steuer- und Auswerteeinheit geliefert werden, zeitlich und damit auch räumlich in Bezug setzt.

7. Koordinatenmeßgerät oder Werkzeugmaschine nach Anspruch 6, **dadurch gekennzeichnet, daß** die Steuer- und Auswerteeinheit (28) die Sensormeßwerte (X'ᵢ) und die Maschinenmeßwerte (xᵢ,yᵢ,zᵢ) zeitlich in Bezug setzt, indem auch den Maschinenmeßwerten (xᵢ,yᵢ,zᵢ) vom Zeitgeber (21) der Steuer- und Auswerteeinheit Zeitstempel (tsᵢ) angefügt werden, und die Zeitstempel (ttᵢ) der Sensormeßwerte (xᵢ) mit den Zeitstempeln (tsᵢ) der Maschinenmeßwerte verglichen werden.

8. Koordinatenmeßgerät oder Werkzeugmaschine nach Anspruch 7, **dadurch gekennzeichnet, daß** die Steuer- und Auswerteeinheit (28) aus den zeitlich in Bezug gesetzten Sensormeßwerten (X'ᵢ) und den Maschinenmeßwerten über Interpolation Paare (xᵢₙₜₑᵣ, x'₁) von Sensormeßwerten und Maschinenmeßwerten berechnet, die zeitlich und damit auch räumlich zusammengehören.

9. Koordinatenmeßgerät oder Werkzeugmaschine nach Anspruch 7 oder 8, **dadurch gekennzeichnet, daß** die Steuer- und Auswerteeinheit (28) zur Ermittelung von Meßpunkten (X_{ges}) die räumlich zusammengehörenden Sensormeßwerte und Maschinenmeßwerte komponentenrichtig zusammenrechnet.

10. Koordinatenmeßgerät oder Werkzeugmaschine nach einem der Ansprüche 3 bis 9, **dadurch gekennzeichnet, daß** die Steuer- und Auswerteeinheit (28) aus der durch die Zeitstempel festgelegten Abfolge der Sensormeßwerte Analysen, wie insbesondere Schwingungsanalysen zur Korrektur der Meßwerte, durchführt.

11. Verfahren zum Synchronisieren der Steuer- und Auswerteeinheit (28) eines Koordinatenmeßgerätes oder einer Werkzeugmaschine mit einem hiervon unabhängig arbeitenden Meßsensor (6), der von der Mechanik (27) des Koordinatenmeßgerätes oder der Werkzeugmaschine gegenüber einem Werkstück in den drei Koordinatenrichtungen (x,y,z) verfahren werden kann, **gekennzeichnet durch** den Verfahrensschritt, daß ein im Meßsensor vorgesehener Zeitgeber (15) wie auch ein in der Steuer- und Auswerteeinheit (28) vorgesehener Zeitgeber (21) auf einen gemeinsamen Startzeitpunkt abgeglichen werden, wobei die Zeitgeber voneinander unabhängig arbeiten.

12. Verfahren nach Anspruch 11, **dadurch gekennzeichnet, daß** die Zeitgeber auf eine gemeinsame Zeiteinheit normiert werden.

13. Verfahren nach einem der Ansprüche 11 bis 12, **dadurch gekennzeichnet, daß** der Meßsensor (6) die erfaßten Sensormeßwerte (X'ᵢ) zur Weiterverarbeitung mit einem Zeitstempel (ttᵢ) seines Zeitgebers (15) versieht und an die Steuer- und Auswerteeinheit (28) weiterleitet.

14. Verfahren nach Anspruch 13, **dadurch gekennzeichnet, daß** die Sensormeßwerte (X'ᵢ) auf die Bahndaten des Meßablaufes rückgekoppelt werden.

15. Verfahren nach Anspruch 14, **dadurch gekennzeichnet, daß** die Steuer- und Auswerteeinheit zur Rückkoppelung eine Totzeit (Δttᵢ) berechnet, die sich aus der zeitlichen Differenz zwischen dem Zeitstempel (ttᵢ) und dem aktuellen Zeitwert des Zeitgebers (21) in der Steuer- und Auswerteeinheit ergibt, wobei bei größer werdender Totzeit (Δttᵢ) die Wirksamkeit der Rückkoppelung reduziert wird und/oder die Meßgeschwindigkeit (Vₛ) des Meßablaufes reduziert wird.

16. Verfahren nach einem der Ansprüche 13 bis 15, **dadurch gekennzeichnet, daß** die Steuer- und Auswerteeinheit die Sensormeßwerte (X'ᵢ) mit Maschinenmeßwerten (xᵢ,yᵢ,zᵢ), die durch die Steuer- und Auswerteeinheit geliefert werden, zeitlich und damit auch räumlich in Bezug setzt.

17. Verfahren nach Anspruch 16, **dadurch gekennzeichnet, daß** die Steuer- und Auswerteeinheit (28) die Sensormeßwerte (X'ᵢ) und die Maschinenmeßwerte (xᵢ,yᵢ,zᵢ) zeitlich in Bezug setzt, indem auch den Maschinenmeßwerten (xᵢ,yᵢ,zᵢ) vom Zeitgeber (21) der Steuer- und Auswerteeinheit (28) Zeitstempel (tsᵢ) angefügt werden, und die Zeitstempel (ttᵢ) der Sensormeßwerte (ttᵢ) mit den Zeitstempeln (tsᵢ) der Maschinenmeßwerte verglichen werden.

18. Verfahren nach Anspruch 17, **dadurch gekennzeichnet, daß** die Steuer- und Auswerteeinheit (28) aus den zeitlich in Bezug gesetzten Sensormeßwerten und den Maschinenmeßwerten über Interpolation Paare (xᵢₙₜₑᵣ, x'₁) von Sensormeßwerten und Maschinenmeßwerten berechnet, die zeitlich und damit auch räumlich zusammengehören.

19. Verfahren nach Anspruch 18, **dadurch gekennzeichnet, daß** die Steuer- und Auswerteeinheit (28) zur Ermittelung von Meßpunkten die räumlich zusammengehörenden Sensormeßwerte und Maschinenmeßwerte komponentenrichtig zusammenrechnet.

20. Verfahren nach einem der Ansprüche 13 bis 19, **dadurch gekennzeichnet, daß** die Steuer- und Auswerteeinheit (28) aus der durch die Zeitstempel festgelegten Abfolge der Sensormeßwerte Analysen, wie insbesondere Schwingungsanalysen zur Korrektur der Meßwerte, durchführt.

## Claims

1. Coordinate measuring machine or machine, tool having a control and evaluation unit (28), a mechanism (27) and at least one measuring sensor (6) which operates independently of the control and evaluation unit and can be moved by the mechanism (27) of the coordinate measuring machine or the machine tool with respect to a workpiece to be measured (7) in the three coordinate directions (x,y,z), **characterized in that** both a timer (15) is provided in the measuring sensor for the purpose of synchronizing the measuring sensor (6) and the control and evaluation unit (28), and a timer (21) is provided in the control and evaluation unit (28), the timers operating independently of one another, and there being provided an adjusting unit (29) which is set up for adjusting the said timers to a common starting instant.

2. Coordinate measuring machine or machine tool according to Claim 1, **characterized in that** at least one normalization unit (11, 30) is provided which additionally normalizes the timers to a common time unit.

3. Coordinate measuring machine or machine tool according to one of Claims 1 to 2, **characterized in that** for further processing the measuring sensor (6) provides the detected sensor measured values (X'ᵢ) with a time stamp (ttᵢ) of its timer (15) and passes them on to the control and evaluation unit (28).

4. Coordinate measuring machine or machine tool according to Claim 3, **characterized in that** the control and evaluation unit (28) feeds the sensor measured values (X'ᵢ) back to the track data of a measuring cycle.

5. Coordinate measuring machine or machine tool according to Claim 4, **characterized in that** for the purpose of feedback the control and evaluation unit calculates a dead time (Δttᵢ) which is yielded from the time difference between the time stamp (ttᵢ) and the current time value of the timer (21) in the control and evaluation unit, the effectiveness of the feedback being reduced and/or the measuring speed (Vₛ) of the measuring cycle being reduced as the dead time (Δttᵢ) increases.

6. Coordinate measuring machine or machine tool according to one of Claims 3 to 5, **characterized in that** the control and evaluation unit relates the sensor measured values (X'ᵢ) temporally and thus also spatially to machine measured values (xᵢ,yᵢ,zᵢ) which are supplied by the control and evaluation unit.

7. Coordinate measuring machine or machine tool according to Claim 6, **characterized in that** the control and evaluation unit (28) relates the sensor measured values (X'ᵢ) temporally to the machine measured values (xᵢ,yᵢ,zᵢ) by virtue of the fact that the timer (21) of the control and evaluation unit also adds time stamps (tsᵢ) to the machine measured values (xᵢ,yᵢ,zᵢ), and that the time stamps (ttᵢ) of the sensor measured values (X'ᵢ) are compared with the time stamps (tsᵢ) of the machine measured values.

8. Coordinate measuring machine or machine tool according to Claim 7, **characterized in that** the control and evaluation unit (28) uses the time-related sensor measured values (X'ᵢ) and the machine measured values to calculate by interpolation pairs (Xinter, x'₁) of sensor measured values and machine measured values which belong together temporally and therefore also spatially.

9. Coordinate measuring machine or machine tool according to Claim 7 or 8, **characterized in that** in order to determine measured points (X_{ges}) the control and evaluation unit (28) sums up the sensor measured values and machine measured values belonging together spatially correctly by component.

10. Coordinate measuring machine or machine tool according to one of Claims 3 to 9, **characterized in that** the control and evaluation unit (28) uses the sequence of the sensor measured values which is defined by the time stamps to carry out analyses such as, in particular, modal analyses for correcting the measured values.

11. Method for synchronizing the control and evaluation unit (28) of a coordinate measuring machine or machine tool with a measuring sensor (6) which operates independently thereof and can be moved by the mechanism (27) of the coordinate measuring machine or the machine tool with respect to a workpiece in the three coordinate directions (x,y,z), **characterized by** the method step that a timer (15) provided in the measuring sensor, and also a timer (21) provided in the control and evaluation unit (28) are adjusted to a common starting instant, the timers operating independently of one another.

12. Method according to Claim 11, **characterized in that** the timers are normalized to a common time unit.

13. Method according to one of Claims 11 to 12, **characterized in that** that for further processing, the measuring sensor (6) provides the detected sensor measured values (X'ᵢ) with a time stamp (ttᵢ) of its timer (15) and passes them on to the control and evaluation unit (28).

14. Method according to Claim 13, **characterized in that** the sensor measured values (X'ᵢ) are fed back to the track data of the measuring cycle.

15. Method according to Claim 14, **characterized in that** for the purpose of feedback the control and evaluation unit calculates a dead time (Δttᵢ) which is yielded from the time difference between the time stamp (ttᵢ) and the current time value of the timer (21) in the control and evaluation unit, the effectiveness of the feedback being reduced and/or the measuring speed (Vₛ) of the measuring cycle being reduced as the dead time (Δttᵢ) increases.

16. Method according to one of Claims 13 to 15, **characterized in that** the control and evaluation unit relates the sensor measured values (X'ᵢ) temporally and thus also spatially to machine measured values (xᵢ, yᵢ, zᵢ) which are supplied by the control and evaluation unit.

17. Method according to Claim 16, **characterized in that** the control and evaluation unit (28) relates the sensor measured values (X'ᵢ) temporally to the machine measured values (xᵢ, yᵢ, zᵢ) by virtue of the fact that the timer (21) of the control and evaluation unit also adds time stamps (tsᵢ) to the machine measured values (xᵢ, yᵢ, zᵢ), and that the time stamps (ttᵢ) of the sensor measured values (X'ᵢ) are compared with the time stamps (tsᵢ) of the machine measured value.

18. Method according to Claim 17, **characterized in that** the control and evaluation unit (28) uses the time-related sensor measured values and the machine measured values to calculate by interpolation pairs (xᵢₙₜₑᵣ, x'₁) of sensor measured values and machine measured values which belong together temporally and therefore also spatially.

19. Method according to Claim 18, **characterized in that** in order to determine measured points the control and evaluation unit (28) sums up the sensor measured values and machine measured values belonging together spatially correctly by component.

20. Method according to one of Claims 13 to 19, **characterized in that** the control and evaluation unit (28) uses the sequence of the sensor measured values which is defined by the time stamps to carry out analyses such as, in particular, modal analyses for correcting the measured values.

## Revendications

1. Appareil de mesure de coordonnées ou machine-outil qui présente une unité de commande et d'évaluation (28) d'un mécanisme (27) ainsi qu'au moins un détecteur de mesure (6) qui fonctionne indépendamment de l'unité de commande et d'évaluation et que le mécanisme (27) de l'appareil de mesure de coordonnées ou de la machine-outil peut déplacer dans les trois directions de coordonnées (x,y,z) par rapport à une pièce (7) à mesurer, **caractérisés en ce que** pour synchroniser le détecteur de mesure (6) et l'unité de commande et d'évaluation (28), un cadenceur (15) est prévu dans le détecteur de mesure, un cadenceur (21) étant prévu dans l'unité de commande et d'évaluation (28), les cadenceurs travaillant indépendamment l'un de l'autre, une unité de coordination (29) étant prévue pour coordonner lesdits cadenceurs par rapport à un même instant initial.

2. Appareil de mesure de coordonnées ou machine-outil selon la revendication 1, **caractérisés en ce qu'**est prévue au moins une unité de normalisation (11, 30) qui normalise les cadenceurs par rapport à une même unité de temps.

3. Appareil de mesure de coordonnées ou machine-outil selon l'une des revendications 1 à 2, **caractérisés en ce que** les valeurs de mesure de détecteur (X'ᵢ) saisies et destinées à être encore traitées sont assorties d'une estampille temporelle (ttᵢ) du cadenceur (15) du détecteur de mesure (6), qui est transmise à l'unité de commande et d'évaluation (28).

4. Appareil de mesure de coordonnées ou machine-outil selon la revendication 3, **caractérisés en ce que** l'unité de commande et d'évaluation (28) réintroduit les valeurs de mesure du détecteur (X'ᵢ) dans les données de parcours du déroulement d'une mesure.

5. Appareil de mesure de coordonnées ou machine-outil selon la revendication 4, **caractérisés en ce que** l'unité de commande et d'évaluation calcule pour la réintroduction une durée de retard (Δttᵢ) qui est obtenue à partir de la différence de temps entre l'estampille temporelle (ttᵢ) et la valeur temporelle actuelle du cadenceur (21) dans l'unité de commande et d'évaluation, l'effet de la réintroduction étant réduit et/ou la vitesse de mesure (Vₛ) du déroulement de la mesure étant réduite au cas où la durée de retard (Δttᵢ) augmente.

6. Appareil de mesure de coordonnées ou machine-outil selon l'une des revendications 3 à 5, **caractérisés en ce que** l'unité de commande et d'évaluation met les valeurs de mesure de détecteur (X'ᵢ) en rapport temporel et donc aussi spatial avec des valeurs de mesure de machine (xᵢ,yᵢ,zᵢ) délivrées par l'unité de commande et d'évaluation.

7. Appareil de mesure de coordonnées ou machine-outil selon la revendication 6, **caractérisés en ce que** l'unité de commande et d'évaluation (28) met les valeurs de mesure de détecteur (X'ᵢ) et les valeurs de mesure de machine (xᵢ,yᵢ,zᵢ) en rapport temporel, le cadenceur (21) de l'unité de commande et d'évaluation joignant également une estampille temporelle (tsᵢ) aux valeurs de mesure de machine (xᵢ,yᵢ, zᵢ) et les estampilles temporelles (ttᵢ) des valeurs de mesure de détecteur (X'ᵢ) étant comparées avec les estampilles temporelles (tsᵢ) des valeurs de mesures de machine.

8. Appareil de mesure de coordonnées ou machine-outil selon la revendication 7, **caractérisés en ce qu'**à partir des valeurs de mesure de détecteur (X'ᵢ) et des valeurs de mesure de machine mises en rapport temporel, l_{'}unité de commande et d'évaluation (28) calcule par interpolation des paires (xᵢₙₜₑᵣ, x'₁) de valeurs de mesure de détecteur et de valeurs de mesure de machine qui sont associées temporellement et donc également spatialement.

9. Appareil de mesure de coordonnées ou machine-outil selon les revendications 7 ou 8, **caractérisés en ce que**, pour obtenir des points de mesure (X_{ges}), l'unité de commande et d'évaluation (28) calcule ensemble dans le système de coordonnées les valeurs de mesure de détecteur et les valeurs de mesure de machine associées spatialement.

10. Appareil de mesure de coordonnées ou machine-outil selon l'une des revendications 3 à 9, **caractérisés en ce que** l'unité de commande et d'évaluation (28) effectue des analyses, par exemple et en particulier des analyses d'oscillation pour corriger les valeurs de mesure, à partir de l'ordre des valeurs de mesure de détecteur établi par les estampilles temporelles.

11. Procédé de synchronisation de l'unité de commande et d'évaluation (28) d'un appareil de mesure de coordonnées ou d'une machine-outil qui présente un détecteur de mesure (6) qui fonctionne indépendamment de celle-ci et qu'un mécanisme (27) de l'appareil de mesure de coordonnées ou de la machine-outil peut déplacer par rapport à une pièce dans les trois directions de coordonnées (x,y,z), **caractérisé par** l'étape de procédé qui consiste à coordonner un cadenceur (15) prévu dans le détecteur de mesure et un cadenceur (21) prévu dans l'unité de commande et d'évaluation (28) par rapport à un même instant initial, les cadenceurs fonctionnant indépendamment l'un de l'autre.

12. Procédé selon la revendication 11, **caractérisé en ce que** les cadenceurs sont normés par rapport à une unité de temps commune.

13. Procédé selon l'une des revendications 11 à 12, **caractérisé en ce que** les valeurs de mesure de détecteur (X'ᵢ) saisies et destinées à être encore traitées sont assorties d'une estampille temporelle (ttᵢ) du cadenceur (15) du détecteur de mesure (6) qui est transmise à l'unité de commande et d'évaluation (28).

14. Procédé selon la revendication 13, **caractérisé en ce que** les valeurs de mesure de détecteur (X'ᵢ) sont réintroduites dans les données de parcours du déroulement de mesure.

15. Procédé selon la revendication 14, **caractérisé en ce que** pour la réintroduction, l'unité de commande et d'évaluation calcule une durée de retard (Δttᵢ) qui est obtenue à partir de la différence de temps entre l'estampille temporelle (ttᵢ) et la valeur temporelle actuelle du cadenceur (21) dans l'unité de commande et d'évaluation, l'effet de la réintroduction étant réduit et/ou la vitesse de mesure (Vₛ) du déroulement de la mesure étant réduite au cas où la durée de retard (Δttᵢ) augmente.

16. Procédé selon l'une des revendications 13 à 15, **caractérisé en ce que** l'unité de commande et d'évaluation met les valeurs de mesure de détecteur (X'ᵢ) en rapport temporel et donc aussi spatial avec des valeurs de mesure de machine (xᵢ,yᵢ,zᵢ) délivrées par l'unité de commande et d'évaluation.

17. Procédé selon la revendication 16, **caractérisé en ce que** l'unité de commande et d'évaluation (28) met les valeurs de mesure de détecteur (X'ᵢ) et les valeurs de mesure de machine (xᵢ,yᵢ,zᵢ) en rapport temporel, le cadenceur (21) de l'unité de commande et d'évaluation (28) joignant également une estampille temporelle (tsᵢ) aux valeurs de mesure de machine (xᵢ , yᵢ , zᵢ) , les estampilles temporelles (ttᵢ) des valeurs de mesure de détecteur (X'ᵢ) étant comparées aux estampilles temporelles (tsᵢ) des valeurs de mesure de machine.

18. Procédé selon la revendication 17, **caractérisé en ce qu'**à partir des valeurs de mesure de détecteur et des valeurs de mesure de machine mises en rapport temporel, l'unité de commande et d'évaluation (28) calcule par interpolation des paires (xᵢₙₜₑᵣ, x'₁) de valeurs de mesure de détecteur et de valeurs de mesure de machine qui sont associées temporellement et donc également spatialement.

19. Procédé selon la revendication 18, **caractérisés en ce que**, pour obtenir des points de mesures, l'unité de commande et d'évaluation (28) calcule ensemble dans le système de coordonnées les valeurs de mesure de détecteur et les valeurs de mesure de machine qui sont associées spatialement.

20. Procédé selon l'une des revendications 13 à 19, **caractérisé en ce que** l'unité de commande et d'évaluation (28) effectue des analyses, par exemple et en particulier des analyses d'oscillation pour corriger les valeurs de mesure à partir de l'ordre des valeurs de mesure de détecteur défini par les estampilles temporelles.
